# EUROPÄISCHE PATENTSCHRIFT

(11) **EP 3 325 238 B1**
(45) Veröffentlichungstag und Bekanntmachung des Hinweises auf die Patenterteilung: **04.09.2019**
(21) Anmeldenummer: 16751492.6
(22) Anmeldetag: 19.07.2016
(51) Int. Cl.: B27F 5/12, B27F 5/02

(54) **VERFAHREN UND VORRICHTUNG ZUM AUSBILDEN EINER AUSSPARUNG**
METHOD AND DEVICE FOR FORMING A CUT-OUT
PROCÉDÉ ET DISPOSITIF DE FORMATION D'UNE CAVITÉ

(30) Priorität: 20.07.2015 DE 102015213585
(43) Veröffentlichungstag der Anmeldung: 30.05.2018
(73) Patentinhaber: HOMAG GmbH, 72296 Schopfloch (DE)
(72) Erfinder: PETRAK, Axel, 72202 Nagold (DE)
(74) Vertreter: Hoffmann Eitle
(86) Internationale Anmeldenummer: PCT/EP2016/067150
(87) Internationale Veröffentlichungsnummer: WO 2017/013104

(56) Entgegenhaltungen:
- DE-C- 7 195
- US-A- 3 090
- US-A- 559 858
- US-A- 1 182 298

## Beschreibung

### Technisches Gebiet

Die vorliegende Erfindung bezieht sich auf ein Verfahren zum Ausbilden einer länglichen Aussparung in einem Werkstück, das bevorzugt zumindest abschnittsweise aus Holz, Holzwerkstoffen, Kunststoff oder dergleichen ausgebildet ist, die in Längsrichtung eine variierende Querabmessung aufweist. Ferner bezieht sich die Erfindung auf eine Vorrichtung zum Ausführen dieses Verfahrens. Das Einsatzgebiet einer solchen Vorrichtung bzw. eines solchen Verfahrens liegt insbesondere im Bereich der Möbel- und Bauelementeindustrie.

### Stand der Technik

Im Bereich der Möbelindustrie ist das Ausbilden von Aussparungen in einzelnen Möbelbauteilen ein gängiger Fertigungsschritt. Derartige Aussparungen sind beispielsweise zum Vorsehen von Vorkehrungen erforderlich, die eine Verbindung von verschiedenen Möbelbauteilen ermöglichen.

Zur Vereinfachung des Zusammenbaus verschiedener Möbelbauteile wurde in der letzten Zeit ein neues Verbindungssystem entwickelt. Bei diesem Verbindungssystem weist eines der zu verbindenden Bauteile einen über einen Stift von dem Bauteil beabstandet vorgesehenen Verbindungsteller auf, der mit einer hinterschnittenen Aussparung des anderen zu verbindenden Bauteils in Eingriff gebracht wird. Um den Verbindungsteller in den hinterschnittenen Teil der Aussparung einzuführen, ist die Aussparung länglich mit einer sich vergrößernden Querabmessung in Längsrichtung ausgebildet. Der Verbindungsteller wird in die Aussparung an dem Ende mit der größeren Querabmessung eingeführt und entlang der Aussparung zum anderen, hinterschnittenen Ende bewegt, um so den Verbindungsteller mit dem Hinterschnitt in Eingriff zu bringen und die beiden Möbelbauteile miteinander zu verbinden.

Zur Ausbildung der länglichen Aussparung mit der sich verändernden Querabmessung in Längsrichtung ist ein Verfahren bekannt, bei dem ein erstes kreisförmiges Loch an einem Ende der Aussparung mit einem ersten Fräswerkzeug und ein zweites kreisförmiges Loch am anderen Ende der Aussparung mit einem zweiten Fräswerkzeug gefräst wird. Das zweite Fräswerkzeug weist dabei einen größeren Bearbeitungsdurchmesser als das erste Fräswerkzeug auf. Der Aussparungszwischenraum zwischen dem ersten und zweiten kreisförmigen Loch wird mittels eines dritten Fräswerkzeugs ausgefräst. Das dritte Fräswerkzeug weist einen kleineren Bearbeitungsdurchmesser als erstes und zweites Fräswerkzeug auf und fährt mehrere in Aussparungsquerrichtung hintereinander liegende Trajektorien ab, um die Aussparung mit sich vergrößernder Querabmessung zwischen dem ersten und zweiten kreisförmigen Loch auszubilden.

Das aus dem Stand der Technik bekannte Verfahren zum Ausbilden einer länglichen Aussparung mit sich verändernder Querabmessung in Längsrichtung weist auf Grund der Vielzahl getrennter Bearbeitungsschritte hohe Bearbeitungszeiten, hohe Kosten sowie die Gefahr großer Ausschusszahlen auf.

Ferner ist die Veröffentlichung US 3, 090 A bekannt, die ein Verfahren zum exzentrischen Anbringen eines Werkzeuges beschreibt, sowie die US 559,858 A, die eine Maschine zum Schneiden einer schrägen Nut in Holz zeigt.

### Darstellung der Erfindung

Es ist daher Aufgabe der vorliegenden Erfindung, ein zeit- und kosteneffizientes Verfahren mit einer geringen Störanfälligkeit zum Ausbilden einer länglichen Aussparung in einem Werkstück bereitzustellen, das bevorzugt zumindest abschnittsweise aus Holz, Holzwerkstoffen (beispielsweise einer Spanplatte, einer Holzfaserplatte, usw.), Kunststoff oder dergleichen ausgebildet ist, wobei die Aussparung in Längsrichtung eine variierende Querabmessung aufweist. Ferner ist es eine Aufgabe der vorliegenden Erfindung, eine Vorrichtung zum Ausführen dieses Verfahrens bereitzustellen.

Der Erfindung liegt der Gedanke zugrunde, dass die hohe Bearbeitungszeit, die hohen Kosten und große Ausschusszahlen des Verfahrens im Stand der Technik vor allem dadurch begründet sind, dass dieses eine Mehrzahl von Werkzeugen und komplexe Verfahrtrajektorien für das dritte Fräswerkzeug erfordert.

Die vorliegende Erfindung macht sich diese Erkenntnis zu Nutze und stellt zur Lösung der genannten Probleme ein Verfahren gemäß Anspruch 1 bereit. Das erfindungsgemäße Verfahren zum Ausbilden einer länglichen Aussparung in einem Werkstück, das bevorzugt zumindest abschnittsweise aus Holz, Holzwerkstoffen, Kunststoff oder dergleichen ausgebildet ist, die in Längsrichtung eine variierende Querabmessung aufweist, umfasst das Eintauchen einer Bearbeitungseinrichtung, insbesondere eines Bearbeitungswerkzeugs der Bearbeitungseinrichtung, in das Werkstück, wobei die Bearbeitungseinrichtung einen verstellbaren Bearbeitungsdurchmesser aufweist; das Herbeiführen einer Relativbewegung von Bearbeitungseinrichtung und Werkstück; das Verstellen des Bearbeitungsdurchmessers der Bearbeitungseinrichtung; und das Austauchen der Bearbeitungseinrichtung aus dem Werkstück. Ferner wird der Bearbeitungsdurchmesser der Bearbeitungseinrichtung nach dem Relativbewegen von Bearbeitungseinrichtung und Werkstück und vor dem Austauchen der Bearbeitungseinrichtung aus dem Werkstück verkleinert. Dies ermöglicht eine hohe Bearbeitungsgüte, da während des Austauchens kein Kontakt zwischen Bearbeitungseinrichtung und Werkstück vorliegt.

Bevorzugt weist die Bearbeitungseinrichtung ein Bearbeitungswerkzeug auf. Hier kann es sich beispielsweise um ein Fräswerkzeug handeln. Die Bearbeitungseinrichtung weist einen verstellbaren Bearbeitungs- bzw. Flugkreisdurchmesser auf. Hierfür kann beispielsweise der Abstand des Bearbeitungswerkzeugs zur Rotationsachse der Bearbeitungseinrichtung verstellt werden. Selbstverständlich sind auch andere Ausgestaltungen denkbar.

Bei der genannten Relativbewegung kann es sich um eine Bewegung der Bearbeitungseinrichtung (bei fixiertem Werkstück) oder um eine Bewegung des Werkstücks (bei stationär gehaltener oder angeordneter Bearbeitungseinrichtung) handeln. Auch ist eine gleichzeitige Bewegung der Bearbeitungseinrichtung und des Werkstücks denkbar, um die genannte Relativbewegung herbeizuführen.

Im Rahmen der Erfindung sind die zu bearbeitenden Werkstücke insbesondere plattenförmig. Rein beispielhaft handelt es sich um Möbelfronten, Möbelkorpuse, Einlegebretter oder ähnliches. Auch kann die Erfindung zur Bearbeitung von abschnittsweise plattenförmigen und/oder teilweise oder vollständig gekrümmt ausgebildeten Werkstücken zum Einsatz kommen.

Das erfindungsgemäße Verfahren erfordert keinen Werkzeugwechsel und keine komplexen Verfahrtrajektorien zum Ausbilden einer länglichen Aussparung mit variierender Querabmessung in Aussparungslängsrichtung. Stattdessen wird das Ausbilden der länglichen Aussparung mit lediglich einer Bearbeitungseinrichtung ermöglicht. Ferner müssen Bearbeitungseinrichtung und Werkstück lediglich entlang einer Geraden zum Ausbilden der länglichen Aussparung mit variierender Querabmessung bewegt werden. Demnach wird ein zeit- und kosteneffizientes Verfahren mit einer geringen Störanfälligkeit bereitgestellt.

Ferner wird insbesondere nach dem Einbringen der Aussparung in Dickenrichtung des Werkstücks abschnittsweise zumindest eine Rille oder Nut erzeugt.

Die zuvor genannte Relativbewegung kann gemäß einer bevorzugten Ausführungsform vom Eintauchen bis zum Austauchen geradlinig sein. Insbesondere wird entweder die Bearbeitungseinrichtung oder das Werkstück geradlinig bewegt. Auch ist eine gleichzeitige Bewegung der Bearbeitungseinrichtung und des Werkstücks denkbar. Auf diese Weise werden die Arbeitsabläufe besonders einfach gehalten.

In einer Ausführungsform ist die Tiefe der Aussparung im Werkstück geringer als die Dicke des Werkstücks, wobei die Tiefe der Aussparung insbesondere konstant ist. Insbesondere ist die Aussparung ein länglich ausgebildetes Sackloch. Somit ist die für eine Verbindung genutzte Aussparung an der gegenüberliegenden Seite des Werkstücks nicht sichtbar, und es wird eine optisch ansprechende - da nicht sichtbare - Verbindung zweier Werkstücke ermöglicht.

Die Verfahrensschritte können in der zuvor aufgelisteten Reihenfolge ausgeführt werden. Dies resultiert in besonders kurzen Bearbeitungszeiten und besonders geringen Kosten, da die längliche Aussparung mit der variierenden Querabmessung in Längsrichtung in einem Bearbeitungszug ausgebildet werden kann.

Die Verstellung des Bearbeitungsdurchmessers kann während der Relativbewegung von Bearbeitungseinrichtung und Werkstück erfolgen. Insbesondere erfolgt die Verstellung während der gesamten Relativbewegung. Durch diese Überlagerung der Bewegungen wird ein Verfahren mit einer besonders geringen Fertigungszeit bereitgestellt. Besonders geringe Stückkosten sind das Ergebnis.

In einer bevorzugten Ausführungsform wird das Werkstück mit einer Fördereinrichtung in eine Förderrichtung gefördert, wobei die Bearbeitungseinrichtung in Förderrichtung örtlich fixiert angeordnet ist. Die Relativbewegung zwischen Bearbeitungseinrichtung und Werkstück wird demnach über die Fördereinrichtung herbeigeführt. Mit dieser bevorzugten Ausführungsform werden besonders hohe Stückzahlen und demnach besonders geringe Stückkosten ermöglicht.

Die längliche Aussparung kann eine sich vergrößernde Querabmessung von einem zum anderen Ende aufweisen. Hierfür kann der Bearbeitungs- bzw. Flugkreisdurchmesser so verstellt werden, dass eine derartige längliche Aussparung ausgebildet wird. Somit kann ein Verfahren zum Fertigen des Eingangs benannten neuen Verbindungssystems mit den entsprechenden Vorteilen bereitgestellt werden.

Der Bearbeitungsdurchmesser kann dabei vor dem Austauchen auf den Bearbeitungsdurchmesser beim Eintauchen verstellt werden. Somit wird ein anschließendes Eintauchen in ein Folgewerkstück ermöglicht, ohne das Verstellungen der Bearbeitungseinrichtung erforderlich sind. Dies wiederum ermöglicht eine Fertigung mit geringer Werkstücklücke im Durchlaufverfahren, sodass eine besonders hohe Produktivität bereitgestellt wird.

Ferner ist es bevorzugt, nach dem Austauchen der Bearbeitungseinrichtung aus dem Werkstück, eine Bearbeitungseinrichtung in die Aussparung einzuführen, um zumindest abschnittsweise eine Nut in der Seitenwand der Aussparung einzubringen. Hierfür kann die Bearbeitungseinrichtung, mit welcher auch die längliche Aussparung ausgebildet wurde, oder aber eine zusätzliche Bearbeitungseinrichtung verwendet werden. Handelt es sich um dieselbe Bearbeitungseinrichtung, kann diese ein weiteres Bearbeitungswerkzeug zum Ausbilden der Nut aufweisen. Alternativ kann die Nut auch mit dem Bearbeitungswerkzeug ausgebildet werden, mit welchem die längliche Aussparung ausgebildet wurde. Die Bearbeitungseinrichtung kann dabei entlang der Seitenwand der Aussparung geführt werden, und eine in Tiefenrichtung der Aussparung begrenzte Nut erzeugen. Diese kann zur Verriegelung mit einem weiteren Bauteil in der Aussparung genutzt werden.

In einer weiteren Ausführungsform wird der Bearbeitungsdurchmesser der Bearbeitungseinrichtung während der Relativbewegung zwischen Bearbeitungseinrichtung und Werkstück kontinuierlich verstellt. Dabei ist die Geschwindigkeit der Verstellbewegung insbesondere auf die Relativbewegung zwischen Bearbeitungseinrichtung und Werkstück abgestimmt. Dies erleichtert die Steuerung des Verfahrens.

Gemäß einer weiteren Zielsetzung stellt die vorliegende Erfindung eine Vorrichtung zum Durchführen eines der zuvor beschriebenen Verfahren bereit, die eine Bearbeitungseinrichtung, die einen verstellbaren Bearbeitungsdurchmesser aufweist, und eine Steuerung aufweist, welche eingerichtet ist, eines der zuvor beschriebenen Verfahren auszuführen. Bevorzugt weist die Vorrichtung ferner eine Fördereinrichtung zum Fördern des Werkstücks in eine Förderrichtung auf, wobei die Bearbeitungseinrichtung in Förderrichtung örtlich fixiert vorgesehen ist.

Hinsichtlich der Vorteile der erfindungsgemäßen Vorrichtung wird auf die Vorteile des zuvor beschriebenen Verfahrens verwiesen.

### Kurze Beschreibung der Zeichnungen

Fig. 1 ist eine Seitenansicht eines Werkstücks mit einer länglichen Aussparung, die in Längsrichtung eine variierende Querabmessung aufweist, welche mit einem Verfahren einer ersten bevorzugten Ausführungsform der vorliegenden Erfindung ausgebildet wurde.
Fig. 2 ist eine Abbildung zum Erklären des Verfahrens der ersten bevorzugten Ausführungsform der vorliegenden Erfindung, mit dem die längliche Aussparung aus Fig. 1 ausgebildet wird.
Fig. 3 ist eine Seitenansicht eines Werkstücks mit einer länglichen Aussparung, die in Längsrichtung eine variierende Querabmessung aufweist, welche mit einem Verfahren einer zweiten bevorzugten Ausführungsform der vorliegenden Erfindung ausgebildet wurde.
Fig. 4 ist eine Schnittansicht eines Werkstücks zum Erklären einer dritten bevorzugten Ausführungsform der vorliegenden Erfindung.

### Detaillierte Beschreibung der Erfindung

Im Folgenden werden bevorzugte Ausführungsformen der vorliegenden Erfindung unter Bezugnahme auf die begleitenden Zeichnungen beschrieben.

Die bevorzugten Ausführungsformen beziehen sich auf Verfahren zum Ausbilden einer länglichen Aussparung 2, die in Längsrichtung eine variierende Querabmessung aufweist, in einem Werkstück 1. Das Werkstück 1 besteht bevorzugt zumindest abschnittsweise aus Holz, Holzwerkstoffen, Kunststoff oder dergleichen. Derartige Werkstücke kommen beispielsweise im Bereich der Möbel- und Bauelementeindustrie zum Einsatz. Es kann sich um eine Massivholz- oder Spanplatte, Leichtbauplatte, Sandwichplatte oder dergleichen handeln. Die vorliegende Erfindung ist dabei nicht auf derartige Werkstücke beschränkt.

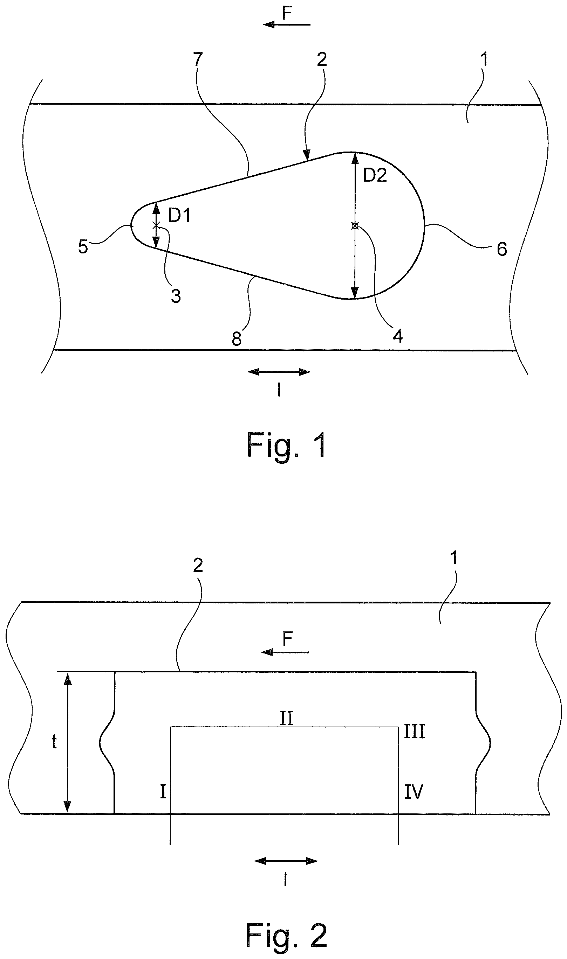

Die in dem Werkstück 1 auszubildende längliche Aussparung 2 weist ein Profil auf, bei dem sich die Aussparungsquerabmessung von einem Ende 3 zum anderen Ende 4 in Längsrichtung 1 der Aussparung 2 verändert. Dabei sind die Enden 5, 6 in Längsrichtung 1 der Aussparung 2 bevorzugt kreissegmentförmig ausgebildet.
Das Kreissegment 5 an einem Ende 3, das in Fig. 1 gezeigt ist und mit der ersten bevorzugten Ausführungsform ausgebildet wird, weist einen Durchmesser D1 auf. Das Kreissegment 6 am anderen Ende 4, das mit der ersten bevorzugten Ausführungsform ausgebildet wird, weist einen Durchmesser D2 auf. Der Durchmesser D2 ist größer als der Durchmesser D1. Der Durchmesser D2 kann dabei mehr als doppelt so groß wie der Durchmesser D1 sein. Die Kreissegmente 5, 6 sind in dieser mit der ersten bevorzugten Ausführungsform ausgebildeten Aussparung 2 bevorzugt über im Wesentlichen gerade Abschnitte 7 und 8 miteinander verbunden.

Die zuvor unter Bezugnahme auf Fig. 1 beschriebene längliche Aussparung 2 wird mit einem Verfahren einer ersten bevorzugten Ausführungsform der vorliegenden Erfindung ausgebildet, das im Folgenden unter Bezugnahme auf Fig. 2 beschrieben wird.

Zur Ausbildung der länglichen Aussparung 2, die in Längsrichtung 1 eine variierende Querabmessung aufweist, wird eine Bearbeitungseinrichtung mit einem Bearbeitungswerkzeug, insbesondere Fräswerkzeug, verwendet, welche einen verstellbaren Bearbeitungs- bzw. Flugkreisdurchmesser aufweist. Dies kann beispielsweise dadurch erreicht werden, dass das Bearbeitungswerkzeug an der Bearbeitungseinrichtung radial verschiebbar vorgesehen ist. In anderen Worten kann der Abstand des Bearbeitungswerkzeugs zur Rotationsachse der Bearbeitungseinrichtung verstellt werden. Vergrößert sich dieser Abstand, wird der Flugkreisdurchmesser der Bearbeitungseinrichtung vergrößert. Wird dieser Abstand verkleinert, verkleinert sich entsprechend der Flugkreisdurchmesser. Somit können beispielsweise mit dieser Bearbeitungseinrichtung Löcher mit unterschiedlichen Durchmessern gefräst werden. Bevorzugt ist die Verstellung des Bearbeitungsdurchmessers dabei kontinuierlich, also stufenlos, und besonders bevorzugt maschinell möglich. Als Bearbeitungseinrichtung kann hier beispielsweise ein Bearbeitungskopf für den Einsatz in Werkzeugmaschinen mit einem um eine Drehachse rotierbaren Grundkörper und einem senkrecht zur Rotationsachse des Grundkörpers verschiebbaren Schieber, der mit mindestens einem Bearbeitungswerkzeug bestückbar ist, verwendet werden.
In der ersten bevorzugten Ausführungsform wird das Werkstück 1 mit einer nicht gezeigten Fördereinrichtung in eine Förderrichtung F gefördert. Die Bearbeitungseinrichtung und damit das Bearbeitungswerkzeug sind bevorzugt seitlich von der Fördereinrichtung angeordnet und senkrecht zur Förderrichtung F verstellbar. In dieser bevorzugten Ausführungsform ist die Bearbeitungseinrichtung in Förderrichtung F örtlich fixiert vorgesehen. Hier sei darauf hingewiesen, dass die Bearbeitungseinrichtung hierauf nicht beschränkt ist und z.B. auch verfahrbar in Förderrichtung F vorgesehen sein kann. Insbesondere kann dabei. z.B. das Verfahren der Bearbeitungseinrichtung in Förderrichtung F so gesteuert werden, dass die Verfahrbewegung in Förderrichtung F mit der Fördergeschwindigkeit der Fördereinrichtung zum Fördern des Werkstücks 1 synchronisiert ist.

In einem ersten Schritt I zum Ausbilden der länglichen Aussparung 2 wird das Bearbeitungswerkzeug der Bearbeitungseinrichtung senkrecht zur Förderrichtung F verfahren, sodass dieses in das Werkstück 1 eindringt. Das Bearbeitungswerkzeug rotiert während des Eintauchens. Die Fördereinrichtung zum Fördern des Werkstücks 1 steht während dieses Eintauchens des Bearbeitungswerkzeugs in das Werkstück 1 bevorzugt still. Das Bearbeitungswerkzeug wird in das Werkstück 1 bis zu einer Tiefe t eingetaucht, die der Tiefe der länglichen Aussparung 2 entspricht. Dabei wird in diesem ersten Schritt an einem Ort in das Werkstück 1 eingetaucht, der dem späteren ersten Ende 3 der länglichen Aussparung 2 entspricht. Durch das Eintauchen wird mit dem Bearbeitungswerkzeug ein Loch mit einem Durchmesser D1 in das Werkstück 1 gefräst. Dieses Loch umfasst das Kreissegment 5 der länglichen Aussparung 2.

In einem zweiten Schritt II wird das Werkstück 1 mit der Fördereinrichtung in die Förderrichtung F gefördert. Während dieser Förderung wird das Bearbeitungswerkzeug weiterhin rotiert. Die Überlagerung der Rotationsbewegung des Bearbeitungswerkzeugs und der Förderbewegung der Fördereinrichtung in die Förderrichtung F führt zu dem Ausbilden einer länglichen Aussparung 2 in dem Werkstück 1. In dieser ersten bevorzugten Ausführungsform wird der Förderbewegung der Fördereinrichtung in die Förderrichtung F und der Rotationsbewegung des Bearbeitungswerkzeugs eine Verstellbewegung des Bearbeitungsdurchmessers der Bearbeitungseinrichtung überlagert. Insbesondere wird der Bearbeitungsdurchmesser während der Relativbewegung von Bearbeitungseinrichtung und Werkstück 1 vergrößert. Es wird das Werkstück 1 in die Förderrichtung F gefördert und der Bearbeitungsdurchmesser verstellt, bis das Bearbeitungswerkzeug das zweite Ende 4 der länglichen Aussparung 2 erreicht. An diesem Punkt weist der Bearbeitungsdurchmesser den Durchmesser D2 auf. Somit wird das Kreissegment 6 am Ende 4 der Aussparung 2 ausgebildet.

In einem dritten Schritt III wird der Bearbeitungsdurchmesser der Bearbeitungseinrichtung von dem Durchmesser D2 auf den Durchmesser D1 verringert. Das Werkstück 1 steht dabei bevorzugt in Förderrichtung F still.

Anschließend taucht das Bearbeitungswerkzeug durch Verfahren senkrecht zur Förderrichtung F in einem vierten Schritt IV aus dem Werkstück 1 aus. Das Werkstück 1 wird anschließend mittels der Fördereinrichtung weiter in die Förderrichtung F befördert, wobei ein neues Werkstück in den Bearbeitungsbereich der Bearbeitungseinrichtung gelangt und das zuvor beschriebene Verfahren wiederholt werden kann.

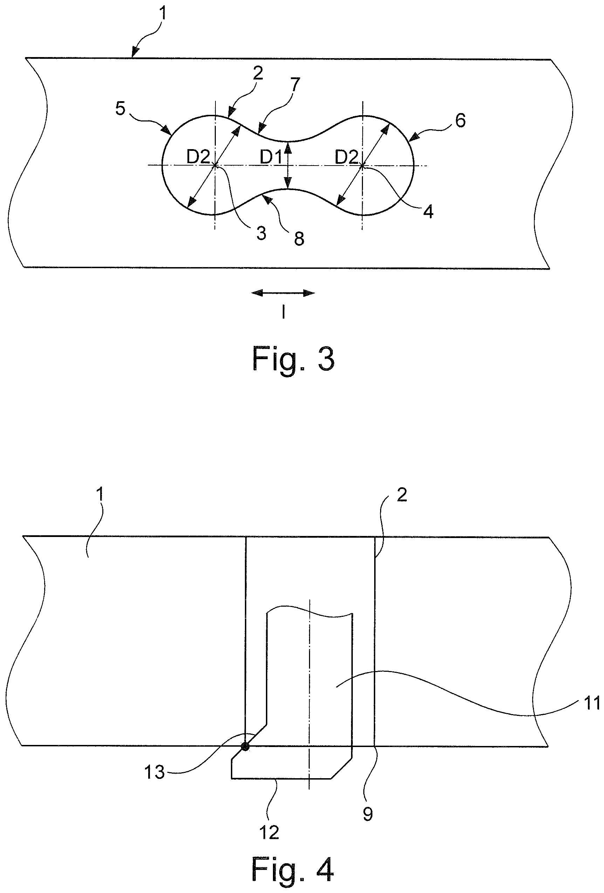

Fig. 3 zeigt eine längliche Aussparung 2, die mittels einer zweiten bevorzugten Ausführungsform der vorliegenden Erfindung ausgebildet wurde. Diese Aussparung 2 gleicht mit Ausnahme des Profilverlaufs quer zur Aussparungslängserstreckung 1 der ersten bevorzugten Ausführungsform. Es wird hier demnach lediglich auf die Unterschiede eingegangen. Im Gegensatz zu der mit der ersten bevorzugten Ausführungsform ausgebildeten Aussparung, weist diese mit der zweiten bevorzugten Ausführungsform ausgebildete Aussparung 2 keine sich stetig vergrößernde Querabmessung in Längsrichtung 1 auf. Die Aussparung 2 weist an beiden Enden 3 und 4 eine Querabmessung D2 auf, die bevorzugt mehr als doppelt so groß wie die Querabmessung D1 in der Mitte der Aussparung 2 ist. Dies hat zur Folge, dass die Kreissegmente 5 und 6 nicht über im Wesentlichen gerade, sondern über bogen-, insbesondere parabelförmige, Abschnitte 7 und 8 miteinander verbunden sind.

Zur Ausbildung der in Fig. 3 gezeigten länglichen Aussparung 2 wird das unter Bezugnahme auf Fig. 2 beschriebene Verfahren derart modifiziert, dass das Bearbeitungswerkzeug mit dem Durchmesser D2 in das Werkstück 1 im Schritt I eingetaucht wird. Im Schritt II wird der Bearbeitungsdurchmesser der Bearbeitungseinrichtung bevorzugt stetig auf den Durchmesser D1 verkleinert und anschließend stetig auf den Durchmesser D2 vergrößert. Die Geschwindigkeit der Durchmesserverstellung ist dabei bevorzugt derart vorgesehen, dass der Durchmesser D1 in der Mitte der auszubildenden länglichen Aussparung 2 in Längsrichtung 1 vorliegt. Die Geschwindigkeit der Durchmesserverkleinerung von dem Durchmesser D2 auf den Durchmesser D1 gleicht bevorzugt der Geschwindigkeit der anschließenden Durchmesservergrößerung von dem Durchmesser D1 auf den Durchmesser D2. Schritte III und IV gleichen jenen der ersten bevorzugten Ausführungsform.

Fig. 4 zeigt eine dritte bevorzugte Ausführungsform der vorliegenden Erfindung. Mit Ausnahme der im Folgenden beschriebenen Unterschiede gleicht diese dritte bevorzugte Ausführungsform der ersten oder zweiten bevorzugten Ausführungsform. Wie unter Bezugnahme auf Figs. 1 und 2 beschrieben, wird die längliche Aussparung 2 bei diesen bis zu einer Tiefe t in dem Werkstück 1 ausgebildet. Wie aus Fig. 4 ersichtlich, ist es alternativ auch möglich, die Aussparung 2 derart auszubilden, dass diese sich vollständig durch die Dicke des Werkstücks 1 hindurch erstreckt. Insbesondere kann in diesem Fall die Rückseite 9 der Aussparung 2 mit einer Fase versehen werden.

Wie in Fig. 4 gezeigt, weist das Bearbeitungswerkzeug 11 der Bearbeitungseinrichtung hierfür bevorzugt eine erste Schneide 12 sowie eine zweite Schneide 13 auf. Die ersten Schneide 12 ist bevorzugt frontal an dem Werkzeug 11 vorgesehen. Die zweite Schneide 13 ist bevorzugt in Längserstreckungsrichtung des Werkzeugs 11 in Bezug auf die erste Schneide 12 nach hinten versetzt angeordnet. Die zweite Schneide 13 kann dabei mit einem Winkel, beispielsweise einem 45° Grad Winkel, gegenüber der ersten Schneide 12 ausgebildet sein.

Zum Ausbilden der länglichen Aussparung 2 mit Fase kann vorerst die Aussparung 2 mit der ersten Schneide 12 des Werkzeugs 11 der Bearbeitungseinrichtung gefräst werden. Hierbei werden bevorzugt sowohl die erste 12 als auch die zweite Schneide 13 vollständig durch das Werkstück 1 hindurch geführt. Anschließend wird der Flugkreisdurchmesser der Bearbeitungseinrichtung vergrößert und das Bearbeitungswerkzeug 11 zum Werkstück 1 zurückbewegt. Hierdurch kommt die zweite Schneide 13 mit der Rückseite 9 der Aussparung 2 in Eingriff, um die Fase auszubilden.

## Patentansprüche

1. Verfahren zum Ausbilden einer länglichen Aussparung (2) in einem Werkstück (1), das bevorzugt zumindest abschnittsweise aus Holz, Holzwerkstoffen, Kunststoff oder dergleichen ausgebildet ist, die in Längsrichtung (1) eine variierende Querabmessung aufweist, mit den Schritten:
Eintauchen einer Bearbeitungseinrichtung in das Werkstück (1), wobei die Bearbeitungseinrichtung einen verstellbaren Bearbeitungsdurchmesser (D1; D2) aufweist;
Herbeiführen einer Relativbewegung zwischen Bearbeitungseinrichtung und Werkstück (1);
Verstellen des Bearbeitungsdurchmessers (D1; D2) der Bearbeitungseinrichtung;
Austauchen der Bearbeitungseinrichtung aus dem Werkstück (1),
**dadurch gekennzeichnet, dass**
der Bearbeitungsdurchmesser (D1; D2) der Bearbeitungseinrichtung nach dem Relativbewegen von Bearbeitungseinrichtung und Werkstück und vor dem Austauchen der Bearbeitungseinrichtung verkleinert wird.

2. Verfahren nach Anspruch 1, bei dem die Relativbewegung vom Eintauchen bis zum Austauchen geradlinig ist.

3. Verfahren nach einem der vorhergehenden Ansprüche, bei dem die Tiefe der Aussparung im Werkstück geringer ist als die Dicke des Werkstücks, wobei die Tiefe der Aussparung insbesondere konstant ist.

4. Verfahren nach einem der Ansprüche 1 bis 3, bei dem sich die Aussparung (2) durch das gesamte Werkstück (1) hindurch erstreckt.

5. Verfahren nach einem der vorhergehenden Ansprüche, bei dem die Verstellung des Bearbeitungsdurchmessers (D1; D2) während der Relativbewegung, insbesondere während der gesamten Relativbewegung, von Bearbeitungseinrichtung und Werkstück (1) erfolgt.

6. Verfahren nach einem der vorhergehenden Ansprüche, bei dem das Werkstück (1) mit einer Fördereinrichtung in eine Förderrichtung (F) gefördert wird und die Bearbeitungseinrichtung in Förderrichtung (F) örtlich fixiert vorgesehen ist.

7. Verfahren nach einem der vorhergehenden Ansprüche, bei dem der Bearbeitungsdurchmesser (D1; D2) so verstellt wird, dass eine längliche Aussparung (2) mit sich vergrößernder Querabmessung von einem (3) zum anderen Ende (4) der Aussparung (2) ausgebildet wird.

8. Verfahren nach Anspruch 7, bei dem der Bearbeitungsdurchmesser (D2) vor dem Austauchen auf den Bearbeitungsdurchmesser beim Eintauchen (D1) verstellt wird.

9. Verfahren nach einem der vorhergehenden Ansprüche, bei dem nach dem Austauchen der Bearbeitungseinrichtung aus dem Werkstück (1) eine Bearbeitungseinrichtung in die Aussparung eingeführt wird, um zumindest abschnittsweise eine Nut in der Seitenwand der Aussparung einzubringen.

10. Verfahren nach einem der vorhergehenden Ansprüche, bei dem der Bearbeitungsdurchmesser (D1; D2) der Bearbeitungseinrichtung während der Relativbewegung zwischen Bearbeitungseinrichtung und Werkstück (1) kontinuierlich verstellt wird.

11. Vorrichtung zum Durchführen des Verfahrens nach einem der vorhergehenden Ansprüche, aufweisend
eine Bearbeitungseinrichtung, die einen verstellbaren Bearbeitungsdurchmesser (D1; D2) aufweist,
eine Steuereinrichtung, die eingerichtet ist, das Verfahren nach einem der vorhergehenden Ansprüche auszuführen.

12. Vorrichtung nach Anspruch 11, ferner mit einer Fördereinrichtung zum Fördern des Werkstücks (1) in eine Förderrichtung (F), wobei die Bearbeitungseinrichtung in Förderrichtung (F) örtlich fixiert vorgesehen ist.

## Claims

1. Method for forming an elongate cutout (2), which has a varying transverse dimension in the longitudinal direction (1), in a workpiece (1) which is preferably made of wood, wood materials, plastic or the like, at least in some sections, comprising the steps of:
plunging a machining device into the workpiece (1), wherein the machining device has an adjustable machining diameter (D1; D2);
performing a relative movement between the machining device and the workpiece (1);
adjusting the machining diameter (D1; D2) of the machining device;
removing the machining device out of the workpiece (1),
**characterised in that**
the machining diameter (D1; D2) of the machining device is reduced after the relative movement of the machining device and workpiece and before removal of the machining device.

2. Method according to claim 1, wherein the relative movement is linear, from plunging in to removing.

3. Method according to any one of the preceding claims, wherein the depth of the cutout in the workpiece is less than the thickness of the workpiece, wherein the depth of the cutout is in particular constant.

4. Method according to any of claims 1 to 3, wherein the cutout (2) extends through the entire workpiece (1).

5. Method according to any one of the preceding claims, wherein the adjustment of the machining diameter (D1; D2) takes place during the relative movement, in particular during the entire relative movement of the machining device and the workpiece (1).

6. Method according to any one of the preceding claims, wherein the workpiece (1) is conveyed by a conveying device in a conveying direction (F) and the machining device is fixed in place in the conveying direction (F).

7. Method according to any one of the preceding claims, wherein the machining diameter (D1; D2) is adjusted such that an elongate cutout (2) is formed with a transverse dimension which increases from one (3) end to the other end (4) of the cutout (2).

8. Method according to claim 7, wherein the machining diameter (D2) is adjusted prior to removal to the machining diameter on plunging-in (D1).

9. Method according to any one of the preceding claims, wherein after removal of the machining device out of the workpiece (1) a machining device is introduced into the cutout to form a groove in the side wall of the cutout, at least in sections.

10. Method according to any of the preceding claims, wherein the machining diameter (D1; D2) of the machining device is continuously adjusted during the relative movement between the machining device and the workpiece (1).

11. Device for carrying out the method according to any one of the preceding claims, having
a machining device which has an adjustable machining diameter (D1; D2),
a controller which is configured to carry out the method according to any one of the preceding claims.

12. Device according to claim 11, further comprising a conveying device for conveying the workpiece (1) in a conveying direction (F), wherein the machining device is fixed in place in the conveying direction (F).

## Revendications

1. Procédé de réalisation d'un évidement oblong (2) dans une pièce à usiner (1) qui est réalisée de préférence au moins par section en bois, matériau dérivé du bois, matière plastique ou similaires, qui présente dans le sens longitudinal (1) une dimension transversale variable, avec les étapes :
immersion d'un dispositif d'usinage dans la pièce à usiner (1), dans lequel le dispositif d'usinage présente un diamètre d'usinage (D1 ; D2) réglable ;
provocation d'un mouvement relatif entre le dispositif d'usinage et la pièce à usiner (1) ;
réglage du diamètre d'usinage (D1 ; D2) du dispositif d'usinage ;
sortie du dispositif d'usinage de la pièce à usiner (1),
**caractérisé en ce que**
le diamètre d'usinage (D1; D2) du dispositif d'usinage est réduit après le déplacement relatif du dispositif d'usinage et de la pièce à usiner et avant la sortie du dispositif d'usinage.

2. Procédé selon la revendication 1, pour lequel le mouvement relatif de l'immersion à la sortie est en ligne droite.

3. Procédé selon l'une quelconque des revendications précédentes, pour lequel la profondeur de l'évidement dans la pièce à usiner est inférieure à l'épaisseur de la pièce à usiner, dans lequel la profondeur de l'évidement est en particulier constante.

4. Procédé selon l'une quelconque des revendications 1 à 3, pour lequel l'évidement (2) s'étend au travers de la pièce à usiner entière (1).

5. Procédé selon l'une quelconque des revendications précédentes, pour lequel le réglage du diamètre d'usinage (D1; D2) est effectué pendant le mouvement relatif, en particulier pendant le mouvement relatif entier, du dispositif d'usinage et de la pièce à usiner (1).

6. Procédé selon l'une quelconque des revendications précédentes, pour lequel la pièce à usiner (1) est transportée avec un dispositif de transport dans un sens de transport (F) et le dispositif d'usinage est prévu en étant fixé localement dans le sens de transport (F).

7. Procédé selon l'une quelconque des revendications précédentes, pour lequel le diamètre d'usinage (D1; D2) est réglé de sorte qu'un évidement oblong (2) soit réalisé avec une dimension transversale s'agrandissant d'une (3) à l'autre extrémité (4) de l'évidement (2).

8. Procédé selon la revendication 7, pour lequel le diamètre d'usinage (D2) est réglé avant la sortie sur le diamètre d'usinage lors de l'immersion (D1).

9. Procédé selon l'une quelconque des revendications précédentes, pour lequel après la sortie du dispositif d'usinage de la pièce à usiner (1) un dispositif d'usinage est introduit dans l'évidement afin d'introduire au moins par section une rainure dans la paroi latérale de l'évidement.

10. Procédé selon l'une quelconque des revendications précédentes, pour lequel le diamètre d'usinage (D1; D2) du dispositif d'usinage est réglé en continu pendant le mouvement relatif entre le dispositif d'usinage et la pièce à usiner (1).

11. Dispositif de réalisation du procédé selon l'une quelconque des revendications précédentes, présentant
un dispositif d'usinage qui présente un diamètre d'usinage réglable (D1 ; D2),
un dispositif de commande qui est aménagé afin de réaliser le procédé selon l'une quelconque des revendications précédentes.

12. Dispositif selon la revendication 11, avec en outre un dispositif de transport pour le transport de la pièce à usiner (1) dans un sens de transport (F), dans lequel le dispositif d'usinage est prévu en étant fixé localement dans le sens de transport (F).
